# EUROPEAN PATENT APPLICATION

(11) **EP 4 734 187 A1**
(43) Date of publication of application: **29.04.2026**
(21) Application number: 24825742.0
(22) Date of filing: 06.06.2024
(51) Int. Cl.: H01M 4/62, C08K 3/04, C08K 3/34, C08L 5/00, C08L 101/00, H01M 4/13, H01M 4/133, H01M 4/134, H01M 4/36, H01M 4/38, H01M 4/48, H01M 4/587

(54) **NON-AQUEOUS SECONDARY BATTERY NEGATIVE ELECTRODE AND NON-AQUEOUS SECONDARY BATTERY USING SAME**

(30) Priority: 22.06.2023 JP 2023102509
(71) Applicant: Panasonic Intellectual Property Management Co., Ltd., Kadoma-shi, Osaka 571-0057 (JP)
(72) Inventor: SAKO, Honami, Kadoma-shi, Osaka 571-0057 (JP)
(74) Representative: Novagraaf International SA
(86) International application number: PCT/JP2024/020787
(87) International publication number: WO 2024/262336

(57) **Abstract**

A non-aqueous secondary battery electrode 60 of the present disclosure includes a negative electrode current collector 6a and a negative electrode active material layer 6b supported on the negative electrode current collector 6a, wherein the negative electrode active material layer 6b includes active material particles and multiple kinds of organic polymers, the multiple kinds of organic polymers include a linear sulfur-containing polysaccharide and at least one other component different from the linear sulfur-containing polysaccharide, and a proportion of mass of the linear sulfur-containing polysaccharide to the total mass of the multiple kinds of organic polymers is 20% or more and 80% or less.

## Description

### TECHNICAL FIELD

The present disclosure relates to a negative electrode for a non-aqueous secondary battery and a non-aqueous secondary battery using the same.

### BACKGROUND ART

Electrodes for batteries such as lithium secondary batteries may undergo significant volume changes as a result of charge and discharge. A large volume change is more likely to occur in the case where high-capacity active materials are used, and may cause performance degradation in the secondary batteries as a result of repeated charge and discharge.

A binder included in an electrode imparts flexibility to the electrode and functions to prevent or minimize degradation in performance of the secondary battery, the degradation being caused by volume change of the electrode. For the binder, a polymer material is used.

### CITATION LIST

### Patent Literature

Patent Literature 1: JP 2001-167755 A
Patent Literature 2: JP 2010-177060 A

### SUMMARY OF INVENTION

### Technical Problem

It has been required to improve durability of electrodes during repeated charge and discharge.

### Solution to Problem

The present disclosure relates to a negative electrode for a non-aqueous secondary battery, including:
a negative electrode current collector; and
a negative electrode active material layer supported on the negative electrode current collector, wherein
the negative electrode active material layer includes a negative electrode active material and multiple kinds of organic polymers,
the multiple kinds of organic polymers include a linear sulfur-containing polysaccharide and at least one other component different from the linear sulfur-containing polysaccharide, and
a proportion of mass of the linear sulfur-containing polysaccharide to total mass of the multiple kinds of organic polymers is 20% or more and 80% or less.

### Advantageous Effects of Invention

According to the technique of the present disclosure, durability of the electrode during repeated charge and discharge can be improved.

### BRIEF DESCRIPTION OF DRAWINGS

FIG. 1 is a cross-sectional view of a negative electrode for a non-aqueous secondary battery according to Embodiment 1 of the present disclosure.
FIG. 2 is a cross-sectional view of a non-aqueous secondary battery according to Embodiment 2 of the present disclosure.

### DESCRIPTION OF EMBODIMENTS

Embodiments of the present disclosure are further explained below by referring to the attached drawings. The present disclosure is not limited to the following embodiments.

### (Embodiment 1)

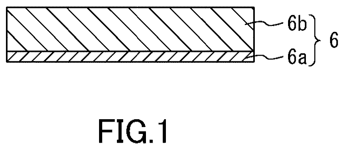

FIG. 1 is a cross-sectional view of a negative electrode for a non-aqueous secondary battery according to Embodiment 1 of the present disclosure. A negative electrode 6 for a non-aqueous secondary battery includes a negative electrode current collector 6a and a negative electrode active material layer 6b. The negative electrode active material layer 6b is supported on the negative electrode current collector 6a. Hereinafter, the negative electrode 6 for a non-aqueous secondary battery may be simply referred to as "negative electrode 6".

The negative electrode active material layer 6b includes a negative electrode active material and multiple kinds of organic polymers. The multiple kinds of organic polymers are dispersed in the negative electrode active material layer 6b and functions as a binder in the negative electrode active material layer 6b. The multiple kinds of organic polymers include a linear sulfur-containing polysaccharide and at least one other component different from the linear sulfur-containing polysaccharide. A proportion of mass of the linear sulfur-containing polysaccharide to the total mass of the multiple kinds of organic polymers is 20% or more and 80% or less. Combining the linear sulfur-containing polysaccharide with the at least one other component improves the durability of the negative electrode 6 during repeated charge and discharge. The improved durability of the negative electrode 6 is reflected in the capacity retention rate during the charge-discharge cycles of a battery using the negative electrode 6.

The combination of the linear sulfur-containing polysaccharide and the at least one other component improves the durability of the negative electrode 6. Though the reason is not necessarily clear, the following consideration can be made. Namely, since one component of the binder contains sulfur atoms, a strong interaction occurs between the component (the linear sulfur-containing polysaccharide) and the at least one other component. The strong interaction occurring between dissimilar organic polymers can effectively prevent or minimize degradation in contact between the negative electrode active material layer 6b and the negative electrode current collector 6a, or degradation in contact between materials included in the negative electrode active material layer 6b, even in the case where the negative electrode active material layer 6b expands and contracts at the time of charge and discharge. Consequently, the durability of the negative electrode 6 is inferred to be improved.

In the case where the aforementioned effect is achieved due to the linear polysaccharide containing sulfur atoms, it is considered that a higher proportion of the linear sulfur-containing polysaccharide provides a higher effect. However, in the case where the proportion of the linear sulfur-containing polysaccharide is excessively high, fluidity of the slurry decreases, making it difficult to uniformly apply the slurry to the negative electrode current collector 6a. If the amount of linear sulfur-containing polysaccharide is excessively small, the aforementioned effect cannot be sufficiently obtained. By adjusting the proportion of the linear sulfur-containing polysaccharide to 20% or more and 80% or less, it is possible to improve the durability of the negative electrode 6 while avoiding problems that manufacture of the negative electrode 6 becomes difficult. The proportion of the mass of the linear sulfur-containing polysaccharide to the total mass of the multiple kinds of organic polymers may be 30% or more and 70% or less.

The linear sulfur-containing polysaccharide is a linear polysaccharide containing sulfur atoms. The linear sulfur-containing polysaccharide may have a sulfate group. In the case where the linear sulfur-containing polysaccharide has a sulfate group, a strong interaction may occur between the linear sulfur-containing polysaccharide and the at least one other component.

The linear sulfur-containing polysaccharide may include carrageenan. Carrageenan is a linear polysaccharide, and it has a sulfate group. When the carrageenan is included, a strong interaction can occur between the linear sulfur-containing polysaccharide and the at least one other component.

The at least one other component different from the linear sulfur-containing polysaccharide may be a component represented by a structural formula different from the structural formula of the linear sulfur-containing polysaccharide. The at least one other component may include a polysaccharide free of an anionic functional group. Such a composition can prevent electrostatic repulsion between the linear sulfur-containing polysaccharide and the at least one other component. Examples of the anionic functional group include a carboxyl group, a carboxymethyl group, a sulfo group, a sulfate group, a phosphate ester group, and a nitro group. The at least one other component may specifically be a polysaccharide free of a sulfate group.

A proportion of mass of the at least one other component to the total mass of the multiple kinds of organic polymers is, for example, 20% or more and 80% or less.

The at least one other component may include galactomannan. That is, the at least one other component may be a component belonging to galactomannan. Galactomannan is a polysaccharide extracted from leguminous plants, consisting of a main chain of β-D-mannose and side chains of α-D-galactose. The ratio of mannose to galactose varies depending on the raw material. Examples of the galactomannan include fenugreek gum, guar gum, tara gum, locust bean gum, and cassia gum. At least one selected from these can be used as the at least one other component. Since a strong interaction can occur between the linear sulfur-containing polysaccharide and the galactomannan, the durability of the negative electrode 6 can be greatly improved when the galactomannan is included.

The galactomannan may include locust bean gum. It is presumed that the specific interaction between the locust bean gum and the linear sulfur-containing polysaccharides (particularly carrageenan) is expected to further enhance the effect of improving the durability of the negative electrode 6.

The proportion of the mass of the linear sulfur-containing polysaccharide to the mass of the galactomannan is, for example, 30% or more. Appropriately adjusting this proportion is expected to further improve in the durability of the negative electrode 6. In the negative electrode 6, it is desirable that the content of the linear sulfur-containing polysaccharide exceeds the content of the galactomannan on a mass basis. With such a composition, further improvement in the durability of the negative electrode 6 can be expected. The upper limit of the proportion of the mass of the linear sulfur-containing polysaccharide to the mass of the galactomannan is not particularly limited. The linear sulfur-containing polysaccharide may be included in the negative electrode 6 up to 19 times the galactomannan, desirably up to 9 times the galactomannan, and more desirably up to 5.7 times the galactomannan, on a mass basis.

A proportion of the mass of the galactomannan to the total mass of the multiple kinds of organic polymers is, for example, 5% or more and less than 50%. It is desirable that the proportion of the mass of the galactomannan to the total mass of the multiple kinds of organic polymers is the smallest among the proportions of masses of the respective organic polymers to the total mass of the multiple kinds of organic polymers. With such a composition, further improvement in the durability of the negative electrode 6 can be expected.

The at least one other component may include cellulose. Cellulose functions to adjust the viscosity of the multiple kinds of organic polymers that act as binders. In the case where the at least one other component includes cellulose, the viscosity of the multiple kinds of organic polymers decreases, making it easy to apply the slurry for forming the negative electrode active material layer 6b to the negative electrode current collector 6a.

Examples of cellulose include carboxymethyl cellulose, methyl cellulose, ethyl cellulose, isopropyl cellulose, hydroxymethyl cellulose, hydroxyethyl cellulose, hydroxypropyl cellulose, hydroxypropyl methylcellulose, cyanoethyl cellulose, and ethylhydroxyethyl cellulose. At least one selected from these can be used as the at least one other component. In particular, carboxymethyl cellulose contributes to improving the dispersibility of solid particles such as active material particles in the slurry.

A proportion of the mass of cellulose to the total mass of the multiple kinds of organic polymers is, for example, 20% or more and 80% or less, and desirably 40% or more and 70% or less. In the case where the at least one other component is cellulose, it is desirable that the proportion of the mass of the cellulose to the total mass of the multiple kinds of organic polymers is equal or greater than the proportion of the mass of the linear sulfur-containing polysaccharide to the total mass of the multiple kinds of organic polymers. Furthermore, in the case where the multiple kinds of organic polymers include three or more kinds of organic polymers, the proportion of the mass of the cellulose may be the greatest among the proportions of masses of the multiple kinds of organic polymers. In the case where the multiple kinds of organic polymers include three or more kinds of organic polymers, it is desirable that the proportion of the mass of the cellulose to the total mass of the multiple kinds of organic polymers be equal to or greater than a mass proportion of the other organic polymers to the multiple kinds of organic polymers. This stabilizes fluidity of the slurry, making it easy to uniformly apply the slurry to the negative electrode current collector 6a.

The at least one other component may include galactomannan and cellulose. In one example, the multiple kinds of organic polymers may include carrageenan, galactomannan, and cellulose, or it may consist of these. With the combination of carrageenan, galactomannan, and cellulose, the multiple effects described above can be obtained in a superimposed manner.

The negative electrode active material included in the negative electrode active material layer 6b includes at least one selected from the group consisting of, for example, graphite, elemental silicon, SiOₓ, a composite material including silicon and carbon, a composite material including SiOₓ and carbon, and a composite material including silicon and metal silicate. Here, x satisfies 0.5 ≤ x ≤ 1.5. The composite material including silicon and carbon may be a material in which particles of elemental silicon are dispersed in a carbon matrix. The composite material including SiOₓ and carbon may be a material in which SiOₓ particles are dispersed in a carbon matrix. The composite material including silicon and a metal silicate may be a material in which particles of elemental silicon are dispersed in a metal silicate matrix. The metal silicate is, for example, lithium silicate. These materials expand and contract as a result of charge and discharge of the battery. Therefore, applying the techniques of the present disclosure to a negative electrode 6 including these materials as active materials further enhances the effect of improving the durability of the negative electrode 6.

The negative electrode active material layer 6b may further include an electroconductive additive. Examples of the electroconductive additive include carbon materials and electroconductive polymers. Examples of the carbon materials include carbon black, graphite, acetylene black, carbon nanotubes, carbon nanofibers, graphene, fullerene, and graphite oxide. Examples of the electroconductive polymers include polyaniline, polypyrrole, and polythiophene. At least one selected from these electroconductive additives may be used.

The negative electrode current collector 6a is, for example, a foil made of a metal material such as stainless steel, nickel, nickel alloy, copper, or copper alloy.

### (Embodiment 2)

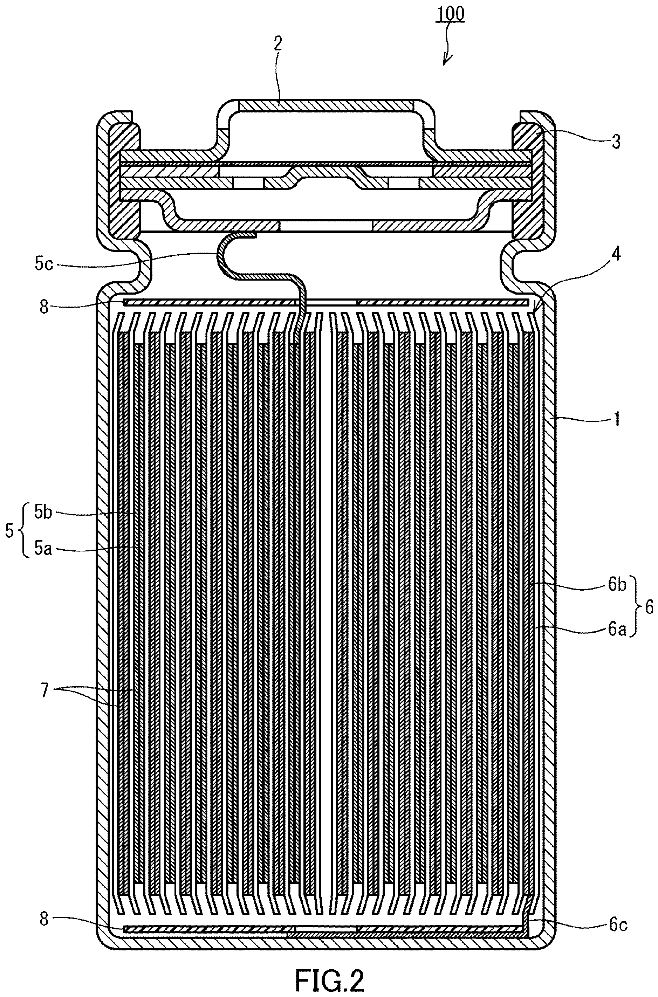

FIG. 2 is a cross-sectional view of a non-aqueous secondary battery according to Embodiment 2 of the present disclosure. A non-aqueous secondary battery 100 includes a container 1 and an electrode assembly 4. The electrode assembly 4 has a wound structure. The electrode assembly 4 is housed in the container 1. The electrode assembly 4 includes a positive electrode 5, a negative electrode 6, and a pair of separators 7. The electrode assembly 4 is impregnated with an electrolyte solution. The opening of the container 1 is sealed with a sealing plate 2. The positive electrode 5 includes a positive electrode current collector 5a and a positive electrode active material layer 5b. One end of a positive electrode lead 5c is connected to the positive electrode 5. The other end of the positive electrode lead 5c is connected to the rear face of the sealing plate 2. An insulating gasket 3 is arranged around the sealing plate 2. The negative electrode 6 includes a negative electrode current collector 6a and a negative electrode active material layer 6b. One end of a negative electrode lead 6c is connected to the negative electrode 6. The other end of the negative electrode lead 6c is connected to the bottom face of the container 1. An insulating ring 8 is disposed on each of the top face and the bottom face of the electrode assembly 4. In the present embodiment, the container 1 has the polarity of the negative electrode 6, and the sealing plate 2 has the polarity of the positive electrode 5. Alternatively, the container 1 may have the polarity of the positive electrode 5, and the sealing plate 2 may have the polarity of the negative electrode 6.

Using the negative electrode 6 described in Embodiment 1 allows to improve the capacity retention rate of the non-aqueous secondary battery 100.

Examples of the non-aqueous secondary battery 100 include a lithium secondary battery, a sodium secondary battery, and a magnesium secondary battery. Typically, the non-aqueous secondary battery 100 is a lithium secondary battery.

The positive electrode current collector 5a is, for example, a foil made of a metal material such as aluminum, aluminum alloy, stainless steel, titanium, or titanium alloy.

The positive electrode active material layer 5b is supported on the positive electrode current collector 5a. The positive electrode active material layer 5b includes a positive electrode active material. Examples of applicable positive electrode active material include a lithium-containing transition metal oxide, a lithium-containing transition metal phosphate, a transition metal fluoride, a polyanion material, a fluorinated polyanion material, a transition metal sulfide, a transition metal oxysulfide, and a transition metal oxynitride. In particular, use of a lithium-containing transition metal oxide or a lithium-containing transition metal phosphate as the positive electrode active material can reduce the cost for manufacturing a battery and can increase the average discharge voltage. Examples of the lithium-containing transition metal oxide include lithium cobalt oxide, lithium nickel cobalt aluminum oxide, lithium nickel cobalt manganese oxide, and lithium nickel manganese oxide. Examples of the lithium-containing transition metal phosphate include lithium iron phosphate, lithium vanadium phosphate, lithium cobalt phosphate, and lithium nickel phosphate.

The positive electrode active material layer 5b may also include other materials such as an electroconductive additive and a binder.

The electroconductive additive is used to reduce the resistance of the positive electrode 5. Examples of the electroconductive additive include the aforementioned materials.

The binder is used to improve the cohesion of the materials constituting the positive electrode 5. Examples of applicable binders include polymeric materials such as polyvinylidene fluoride, a vinylidene fluoride-hexafluoropropylene copolymer, a vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide.

The electrolyte solution is a non-aqueous electrolyte with which the positive electrode 5, the negative electrode 6, and the separators 7 are impregnated. The electrolyte solution may fill the internal space of the container 1. Through the action of the electrolyte solution, lithium ions can travel between the positive electrode 5 and the negative electrode 6.

The electrolyte solution includes a non-aqueous solvent and a lithium salt.

Examples of the non-aqueous solvent include a cyclic carbonate, an aliphatic carbonate, a cyclic ether, an aliphatic ether, a nitrile, and an amide. One selected from these solvents can be used, or two or more thereof can be used in combination.

Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), bis(perfluoroethylsulfonyl)imide lithium (LiN(SO₂C₂F₅)₂), LiAsF₆, LiCF₃SO₃, and lithium difluoro(oxalato)borate. One selected from these lithium salts may be used, or two or more thereof may be used in combination.

The separators 7 each have lithium ion conductivity. As long as the passage of lithium ions is allowed, the material of the separators 7 is not particularly limited. The material of the separators 7 can be at least one selected from the group consisting of a gel electrolyte, an ion exchange resin membrane of a lithium cation exchange resin or the like, a semi-permeable membrane, and a porous membrane. Separators 7 made from these materials can sufficiently ensure the safety of the non-aqueous secondary battery 100. Examples of the gel electrolyte include a gel electrolyte including a fluorinated resin such as PVdF. Examples of the ion exchange resin membrane include a cation exchange membrane and an anion exchange membrane. Examples of the porous membrane include a porous membrane made of a polyolefin resin and a porous membrane made of a glass paper obtained by weaving glass fibers into a non-woven fabric.

The container 1 is, for example, a container made of a metal such as aluminum or stainless steel. The container 1 may have a cylindrical shape or a prismatic shape.

The electrode group 4 may be wound cylindrically or wound elliptically.

The shape of the lithium secondary battery 100 is not limited to a cylindrical shape. Various shapes such as a coin-shape, a square, a sheet, a button, flat, and a laminate can be adopted for the shape of the lithium secondary battery 100.

### (Other embodiments)

### (Appendix)

The following techniques are disclosed based on the above description.

### (Technique 1)

A negative electrode for a non-aqueous secondary battery, including:
a negative electrode current collector; and
a negative electrode active material layer supported on the negative electrode current collector, wherein
the negative electrode active material layer includes a negative electrode active material and multiple kinds of organic polymers,
the multiple kinds of organic polymers include a linear sulfur-containing polysaccharide and at least one other component different from the linear sulfur-containing polysaccharide, and
a proportion of mass of the linear sulfur-containing polysaccharide to total mass of the multiple kinds of organic polymers is 20% or more and 80% or less.

### (Technique 2)

The negative electrode according to Technique 1, wherein the at least one other component includes a polysaccharide free of an anionic functional group.

### (Technique 3)

The negative electrode according to Technique 1 or 2, wherein the at least one other component includes galactomannan.

### (Technique 4)

The negative electrode according to Technique 3, wherein the galactomannan includes locust bean gum.

### (Technique 5)

The negative electrode according to Technique 3 or 4, wherein a proportion of the mass of the linear sulfur-containing polysaccharide to mass of the galactomannan is 30% or more.

### (Technique 6)

The negative electrode according to any one of Techniques 3 to 5, wherein a content of the linear sulfur-containing polysaccharide exceeds a content of the galactomannan.

### (Technique 7)

The negative electrode according to any one of Techniques 3 to 6, wherein a proportion of mass of the galactomannan to the total mass of the multiple kinds of organic polymers is the smallest among the proportions of masses of the respective organic polymers to the total mass of the multiple kinds of organic polymers.

### (Technique 8)

The negative electrode according to any one of Techniques 1 to 7, wherein the linear sulfur-containing polysaccharide has a sulfate group.

### (Technique 9)

The negative electrode according to any one of Techniques 1 to 8, wherein the linear sulfur-containing polysaccharide includes carrageenan.

### (Technique 10)

The negative electrode according to any one of Techniques 1 to 9, wherein the at least one other component includes cellulose.

### (Technique 11)

The negative electrode according to any one of Techniques 1 to 9, wherein the at least one other component includes cellulose, and a proportion of mass of the cellulose to the total mass of the multiple kinds of organic polymers is equal to or greater than the proportion of the mass of the linear sulfur-containing polysaccharide to the total mass of the multiple kinds of organic polymers.

### (Technical 12)

The negative electrode according to any one of Techniques 1 to 11, wherein the negative electrode active material includes at least one selected from the group consisting of graphite, a composite material including silicon and carbon, silicon, SiOₓ, and a composite material including SiOₓ and carbon, where x satisfies 0.5 ≤ x ≤ 1.5.

### (Technical 13)

A non-aqueous secondary battery including the negative electrode according to any one of Techniques 1 to 12.

### EXAMPLES

### [Example 1]

### (Production of positive electrode)

A positive electrode slurry was prepared by mixing and stirring a positive electrode active material having a composition LiNi_{0.8}Mn_{0.2}O₂, acetylene black (AB), polyvinylidene fluoride (PVDF), and N-methyl-pyrrolidone (NMP). A mass ratio of the positive electrode active material, the AB, and the PVDF was as follows. Positive electrode active material : AB : PVDF = 96:2:2. The positive electrode slurry was applied to a surface of an aluminum foil to form a coating film. The coating film was dried and then rolled. This yielded a positive electrode common to Examples and Comparative Examples.

### (Production of negative electrode)

A binder solution was prepared by mixing and stirring carrageenan, carboxymethyl cellulose (CMC), and water. A mass ratio of the carrageenan to the CMC was as follows. Carrageenan : CMC = 50:50. A negative electrode slurry was prepared by mixing and stirring graphite, Si-carbon composite (SiC), carbon nanotubes (CNT), and the binder solution. A mass ratio of the graphite, the SiC, the CNT, and the binder was as follows. Graphite : SiC : CNT : binder = 78:19:0.1:2.9. The mass of the binder is the total mass of the carrageenan and the CMC. The negative electrode slurry was applied to a surface of a copper foil to form a coating film. The coating film was dried and then rolled. This yielded the negative electrode of Example 1.

### (Production of battery)

A current collector lead was attached to each of the common positive electrode and the negative electrode of Example 1. The common positive electrode, the separators, and the negative electrode of Example 1 were assembled and placed into a laminate film container. An electrolyte solution was poured into the container, and the container was then sealed. This yielded a battery of Example 1. Here, separators having a three-layer structure of polypropylene/polyethylene/polypropylene were used. The electrolyte solution was prepared by dissolving lithium hexafluorophosphate at a concentration of 1 mol/L in a mixed solvent of ethylene carbonate, ethyl methyl carbonate, and dimethyl carbonate.

### [Example 2]

A binder solution was prepared by mixing and stirring carrageenan, locust bean gum (LBG), CMC, and water. A mass ratio of the carrageenan, the LBG, and the CMC was as follows. Carrageenan : LBG : CMC = 40:10:50. A negative electrode of Example 2 was prepared by the same method as in Example 1, except that this binder solution was used. The negative electrode of Example 2 was used to produce a battery of Example 2 by the same method as in Example 1.

### [Comparative Example 1]

A binder solution was prepared by mixing and stirring carrageenan, LBG, CMC, and water. A mass ratio of the carrageenan, the LBG, and the CMC was as follows. Carrageenan : LBG : CMC = 10:40:50. A negative electrode of Comparative Example 1 was prepared by the same method as in Example 1, except that this binder solution was used. The negative electrode of Comparative Example 1 was used to produce a battery of Comparative Example 1 by the same method as in Example 1.

### [Comparative Example 2]

A binder solution was prepared by mixing and stirring LBG, CMC, and water. A mass ratio of the LBG to the CMC was as follows. LBG : CMC = 50:50. A negative electrode of Comparative Example 2 was prepared by the same method as in Example 1, except that this binder solution was used. The negative electrode of Comparative Example 2 was used to produce a battery of Comparative Example 2 by the same method as in Example 1.

### [Cycle test]

A cycle test for the batteries of Examples and Comparative Examples was carried out as follows. The batteries were placed in a constant temperature bath at 25°C. The batteries were charged at a current value of 0.3 C until reaching an upper voltage limit of 4.4 V. Next, the batteries were discharged at a current value of 0.5 C until reaching a lower voltage limit of 2.5 V. This charge and discharge cycle was repeated 100 times. In the 50th and 100th charge and discharge cycles, the discharge current was set to 0.2 C. The capacity retention rate (%) was calculated as the percentage of the discharge capacity during the 98th discharge cycle to the discharge capacity during the initial discharge cycle. The results are shown in Table 1.

**[Table 1]**

| | Example 1 | Example 2 | Comparative Example 1 | Comparative Example 2 |
|---|---|---|---|---|
| Carrageenan (mass%) | 50 | 40 | 10 | - |
| Locust bean gum (mass%) | - | 10 | 40 | 50 |
| Carboxymethyl cellulose (mass %) | 50 | 50 | 50 | 50 |
| Capacity retention rate [%] | 91.96 | 92.34 | 91.36 | 90.87 |

The values in each item of Table 1 represent, as percentages, the proportion of the mass of carrageenan to the total mass of the binder, the proportion of the mass of locust bean gum to the total mass of the binder, and the proportion of the mass of carboxymethyl cellulose to the total mass of the binder.

As shown in Table 1, the capacity retention rates of the batteries in Examples 1 and 2 exceeded the capacity retention rates of the batteries in Examples 1 to 3.

As can be understood from the results of Example 2 and Comparative Example 1, an effect of improving the capacity retention rate was not obtained in the case where the proportion of the mass of the carrageenan to the total mass of the binder was excessively low. By adjusting the proportion of the carrageenan to an appropriate range, an effect of improving the capacity retention rate was obtained.

As can be understood from the results of Examples 1 and 2, locust bean gum was not essential for obtaining the effect of improving the capacity retention rate.

As can be understood from the results of Example 2, the effect of improving the capacity retention rate was maximized by combining the three components of carrageenan, locust bean gum, and carboxymethyl cellulose, and by appropriately adjusting the proportion of the mass of carrageenan. The battery of Example 2 also exhibited a high average discharge voltage.

The technique of the present disclosure is useful for a non-aqueous secondary battery such as a lithium secondary battery.

## Claims

1. A negative electrode for a non-aqueous secondary battery, comprising:
a negative electrode current collector; and
a negative electrode active material layer supported on the negative electrode current collector, wherein
the negative electrode active material layer comprises a negative electrode active material and multiple kinds of organic polymers,
the multiple kinds of organic polymers comprise a linear sulfur-containing polysaccharide and at least one other component different from the linear sulfur-containing polysaccharide, and
a proportion of mass of the linear sulfur-containing polysaccharide to total mass of the multiple kinds of organic polymers is 20% or more and 80% or less.

2. The negative electrode according to claim 1, wherein
the at least one other component comprises a polysaccharide free of an anionic functional group.

3. The negative electrode according to claim 1, wherein
the at least one other component comprises galactomannan.

4. The negative electrode according to claim 3, wherein
the galactomannan comprises locust bean gum.

5. The negative electrode according to claim 3, wherein
a proportion of the mass of the linear sulfur-containing polysaccharide to mass of the galactomannan is 30% or more.

6. The negative electrode according to claim 3, wherein
a content of the linear sulfur-containing polysaccharide exceeds a content of the galactomannan.

7. The negative electrode according to claim 3, wherein
a proportion of mass of the galactomannan is the smallest among the proportions of masses of the respective organic polymers to the total mass of the multiple kinds of organic polymers.

8. The negative electrode according to claim 1, wherein
the linear sulfur-containing polysaccharide has a sulfate group.

9. The negative electrode according to claim 1, wherein
the linear sulfur-containing polysaccharide comprises carrageenan.

10. The negative electrode according to claim 1, wherein
the at least one other component comprises cellulose.

11. The negative electrode according to claim 1, wherein
the at least one other component comprises cellulose, and
a proportion of mass of the cellulose to the total mass of the multiple kinds of organic polymers is equal to or greater than the proportion of the mass of the linear sulfur-containing polysaccharide to the total mass of the multiple kinds of organic polymers.

12. The negative electrode according to claim 1, wherein
the negative electrode active material comprises at least one selected from the group consisting of graphite, a composite material comprising silicon and carbon, silicon, SiOₓ, and a composite material comprising SiOₓ and carbon, where x satisfies 0.5 ≤ x ≤ 1.5.

13. A non-aqueous secondary battery comprising the negative electrode according to any one of claims 1 to 12.
